# EUROPEAN PATENT APPLICATION

(11) **EP 3 266 998 A1**
(43) Date of publication of application: **10.01.2018**
(21) Application number: 16758389.7
(22) Date of filing: 25.02.2016
(51) Int. Cl.: F01M 11/04, F16B 35/04

(54) **CONICAL OIL PAN PLUG FOR STRIPPED ALUMINIUM AND IRON OIL PANS**

(30) Priority: 05.03.2015 BR BR
(71) Applicant: De Souza, Antonio Ubirajara, 13930-000 Serra Negra - SP (BR)
(72) Inventor: De Souza, Antonio Ubirajara, 13930-000 Serra Negra - SP (BR)
(74) Representative: Urizar Anasagasti, Jesus Maria
(86) International application number: PCT/BR2016/000020
(87) International publication number: WO 2016/138573

(57) **Abstract**

Conical stopper for damaged aluminum and iron made vehicle sump, it is related to a stopper (10) of a type used in threaded openings (AB) of several vehicle oil sumps (CT). Said conical stopper (10) comprises a single piece (20) which is preferably manufactured with steel or any other suitable material, said conical stopper having a hexagonal head (21). A threaded NPT portion (23) extends from a proximal end of a flat surface (22) in the hexagonal head (21), said threaded portion having a truncated cone-shape and the base (23A) of said threaded portion having a wider diameter (dI) and extends longitudinally in accordance with an axis (El) having a slight tapering and configures a reduced diameter (d2) in a distal end (23B). Said slight angularity tapering (a) in said threaded portion (23) configures gradual sealing points (PV) for local sealing of damaged threaded openings (AB) in several vehicle oil sumps (CT), thus avoiding lubricating oil to run off from sumps.

## Description

### TECHNICAL FIELD.

This present patent application is related to a conical stopper for use in aluminum and iron made vehicle oil sumps having their threaded portion damaged, said conical stopper outstandingly providing for novel design features especially in its threaded portion which is truncated conical-shaped in order to become perfectly adjusted in a damaged thread of said vehicle oil sumps, thus providing sealing of said vehicle oil sumps and consequently holding lubricating oil inside the vehicle motor after oil replacement is made.

### BACKGROUND OF THE TECHNIQUE

It is of general knowledge that vehicle oil sump is made of a metallic container mounted on the bottom end of several vehicles wherein a motor lubricating oil is deposited in order to maintain a determined oil level to ensure a constant lubrication of said motor. The volume of deposited oil may vary depending upon the model of said vehicle.

It is also known that lubricating oil in a motor requires periodical replacement since an adequate viscosity is required to be maintained in order to decrease motor wear. On the other hand, a vehicle owner should pay close attention to the level of the vehicle motor oil which cannot remain higher or lower than the maximum and minimum specified levels.

To ensure such condition it is indispensable that a vehicle owner keeps aware of possible oil leakage which might happen due to several reasons such as wear in the inner threaded ring portion of vehicle oil sumps wherein a stopper is thread fitted to seal leakage from said sump. Said wear results in stopper becoming loose and consequently resulting in an inadequate sealing of the vehicle oil sump that will allow oil to run off causing damage to said motor.

In general, vehicle oil sumps are manufactured with aluminum material and draining stopper is manufactured with steel material. The damage in the threaded portion located in the opening wherefrom oil runs off motor occurs due to a too tight repeated screwing of said stopper at the occasion motor oil is replaced in such a way to allow breaking of the aluminum thread of oil sump since this metal is less resistant than steel.

Currently, means used to solve such short-comings are those of empirical motivation such as widening the threaded portion of said stopper by application of a steel filament or even replacement of said oil sump, thus resulting in a high cost to owner of a vehicle.

### ANALYSIS OF THE PRIOR ART

In a search carried out in specialized databank related to vehicle oil sumps documents were found such as Brazilian document no. MU7601359-6 which teaches a butterfly shaped stopper for sealing leakage of oil in sumps. The body of said stopper is made of a butterfly-shaped head and a partially threaded tubular portion.

Another document found with no. JP5548833 teaches an oil sump which includes a male fitting screw that engages to a female thread portion formed in an inner peripheral surface of a discharge port made at a corner portion in a lower end of oil sump. A screw head, from which an end of said screw extends towards an axis, is connected through a base portion. Said sump also includes a first annular ring in which a screw from a spindle portion is inserted. Yet, also includes a second annular ring which is fastened to an end of a spring with oil and in which said screw from said spindle portion is inserted. Vet, said sump also includes a cone-shaped portion in which diameter is gradually reduced from an end of said screw.

Said documents found and aforesaid do not teach none of the features in the subject-matter now claimed as invention and improved in spite of teaching a plug for oil sump. Thus it ensures that such subject-matter now claimed as invention meets legal requirements for patentability.

### OBJECTIVES OF THE INVENTION

Thus, thinking of providing improvements to the consumer market this present applicant developed a conical stopper for a damaged vehicle oil sump made of aluminum or steel,

Said conical stopper comprises a single piece made of steel material or any other suitable material, said stopper having a hexagonal head and a threaded portion that extends from hexagonal head, said threaded portion having an NPT truncate cone shape. Said threaded portion firstly extends from its proximal end having a wide diameter and follows further to become tapered up to its distal end.

Said diameter tapering allows said threaded and tapered distal end in said stopper to be screwed into the threaded and partially non- damaged opening of the vehicle oil sump. At the point where the threaded opening of the oil sump becomes damaged the threaded portion with wider diameter of the conical stopper becomes coupled into the threaded opening of the vehicle oil sump in such a way to maintain a wholly tight sealing of said vehicle oil sump opening thus avoiding motor lubricating oil to flow off sump.

Said conical NPT thread may be provided with variations in dimension to perfectly fit in each and distinct model of vehicle oil sump available in the market thus offering a perfect functionality In its application.

Another advantage is found in that said conical stopper now innovated quickly solves the problems encountered with leakage's In damaged oil sumps, thus avoiding employment of qualified workmanship and being able of affording a reduction in time spent to repair such a damage in oil sump as well,

Further, another advantage is found in that said conical stopper now innovated avoids the short-coming of having said vehicle oil sump replaced, thus significantly reducing vehicle maintenance costs for the vehicle owner.

### DESCRIPTION OF THE FIGURES

The drawings attached herewith illustrate arrangement of the conical NPT stopper subject-matter of this patent application in which:

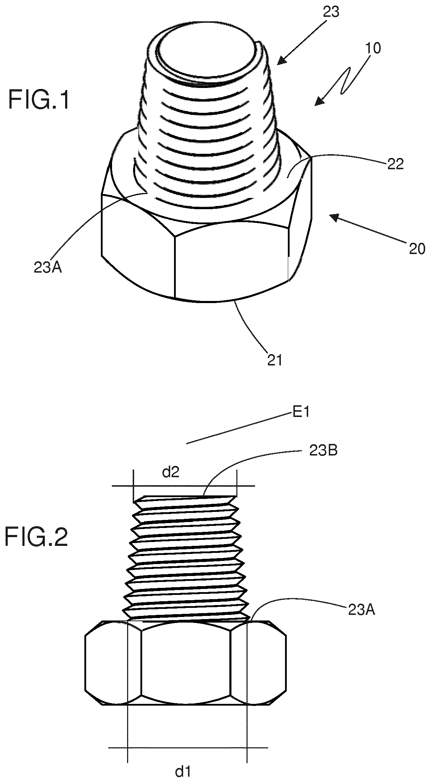

Figure 1 illustrates a perspective view of said innovated conical stopper;
Figure 2 illustrates a side view of the same;

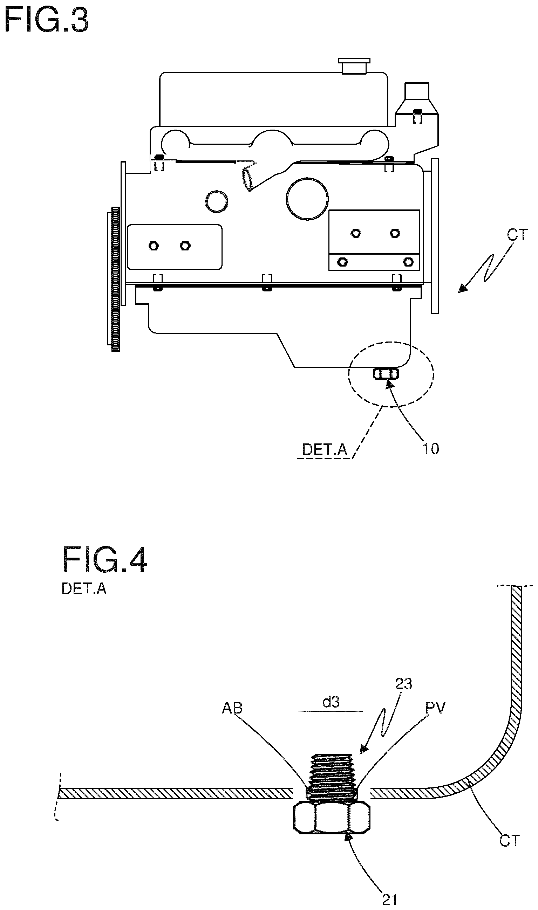

Figure 3 illustrates a side view of a vehicle oil sump illustrating assemblage of said conical stopper; and
Figure 4 illustrates an A.A cut-off view illustrating a damaged threaded opening and sealing means of lubricating oil escape with use of said conical stopper now innovated.

### DETAILED DESCRIPTION OF THE INVENTION

Referring to the illustrated drawings, this present patent application is related to a conical stopper for damaged aluminum and iron made vehicle sumps and, more precisely, it is related to a conical stopper (10) of a type used in threaded openings (AB) of several vehicle oil sumps (CT). Said stopper (10) comprises a single piece (20) which is preferably manufactured from steel or other suitable material and said stopper (10) has a hexagonal head (21).

In accordance with this present invention, a threaded NPT portion (23) extends from a flat surface (22) in said hexagonal head (21), said threaded NPT portion having a truncated cone shape. The base (23A) of said threaded portion, a proximal end, has a wider diameter (dI) and extends longitudinally in accordance with an axis (EI) with a slight tapering that configures a reduced diameter (d2) at a distal end (23B).

Said tapering with angularity (a) in said threaded portion (23) configures gradual sealing points (PV) to provide local sealing in the damaged threaded openings (AB) of several vehicle oil sumps (CT), thus avoiding lubricating oil in the motor to run off from said sump.

Said conical NPT thread may be provided with variations in dimensions (dI) and (d2) for adjustments in diametric dimensions (d3) of threaded openings (AB) in different models of vehicle oil sumps (CT).

It is certain that by the time this present invention is put into practice modifications might be introduced into certain details of construction and form without, however, meaning a departure from the fundamental principles which are clearly based in the set of claims, thus it is to be understood that the terminology herein employed has no intention to put any limits to this invention.

## Claims

1. Conical stopper for damaged aluminum and iron made vehicle oil sumps, more precisely it Is related to a stopper (10) of a type used in threaded openings (AB) of several vehicle oil sumps (CT); said stopper (10) comprises a single piece (20) which is preferably manufactured with steel or any other suitable material, having said stopper (10) a hexagonal head (21), **characterized in that** a threaded NPT portion (23) extends from a flat surface (22) proximal end in the hexagonal head (21), said threaded portion having a truncated conical shape and the base (23A) of said threaded portion having a wider diameter (dI) and extending longitudinally in accordance with an axis (El) having a slight tapering that configures a reduced diameter (d2) in a distal end (23B).

2. Conical stopper for damaged aluminum and iron made vehicle sumps in accordance with the previous claim **characterized in that** a slight tapering angularity (a) in said threaded portion (23) configures gradual sealing points (PV) for local sealing of damaged threaded openings (AB) in vehicle oil sumps (CT).

3. Conical stopper for damaged aluminum and iron made vehicle sumps In accordance with claim 1, **characterized in that** said NPT conical thread (23) is provided with variation in dimensions (dI) and (d2) for adjustment in diametric dimensions (d3) of threaded openings (AB) in different models of vehicle oil sumps (CT). Abstract
